# EUROPÄISCHE PATENTANMELDUNG

(11) **EP 0 657 273 A2**
(43) Veröffentlichungstag der Anmeldung: **14.06.1995**
(21) Anmeldenummer: 94117740.4
(22) Anmeldetag: 09.11.1994
(51) Int. Cl.: B29D 23/00, F16L 11/12, B32B 1/08

(54) **Verfahren und Vorrichtung zur Herstellung diffusionsdichter mehrschichtiger Kunststoffrohre**

(30) Priorität: 08.12.1993 DE 4341859
(71) Anmelder: PLASTIC OMNIUM GmbH, D-61184 Karben (DE)
(72) Erfinder: Henzler, Wolfgang, Dipl.-Chem., D-58644 Iserlohn (DE); Probst, Werner, Dipl.-Kfm., D-63628 Bad Soden-Salmünster (DE)
(74) Vertreter: Reinhard - Skuhra - Weise & Partner

(57) **Zusammenfassung**

Bei einem Verfahren und einer Vorrichtung zur Herstellung diffusionsdichter mehrschichtiger Kunststoffrohre, insbesondere für Kraftstoffleitungen, wird um einen vorzugsweise aus PA bestehenden Rohrschlauch (12) eine permeationsdichte Folie (14), vorzugsweise aus Aluminium oder PTFE-Band, überlappend gewickelt und anschließend der umwickelte Rohrschlauch mit wenigstens einer Außenrohrschicht (16) ummantelt.

## Beschreibung

Die Erfindung betrifft ein Verfahren und eine Vorrichtung zur Herstellung diffusionsdichter mehrschichtiger Kunststoffrohre, insbesondere für Kraftstoffleitungen.

Für Kraftstoffleitungen und Tankanlagen wird u.a. aus Gründen der Gewichtsersparnis immer mehr Kunststoff eingesetzt, der mehr oder weniger diffusionsdicht ist. Dabei gilt es, die Diffusion der Aromaten von Kraftstoff in dem Gesamtsystem Kunststoff-Kraftstofftank mit Zu- und Ableitungen wesentlich zu reduzieren bzw. zu verhindern.

Bekannt ist bereits die Herstellung komplizierter Rohrleitungsprofil-Aufbauten unter Verwendung klassischer Polyamidrohre, beispielsweise PA 6.6 oder PA 10 oder PA 6, zur Bildung von mehrschichtigen Kunststoffsystemen. Auch die Anschlußelemente werden inzwischen häufig aus Mehrkomponentensystemen zusammengesetzt.

Bezüglich der Bemühungen zur Verbesserung der Diffusionstätigkeit gibt es zwei Entwicklungstendenzen. Zum einen ist es bekannt, siebenfach koextrudierte Kunststoffrohre mit entsprechendem Aufbau als diffusionsdichtes und auswaschungsfreies Benzinleitungssystem zu verwenden, wobei vorzugsweise Kunststoffrohre mit PA-Schichten oder PVDF-Homopolymerschichten eingesetzt werden und ergänzend auch EVOH-, PBT-, PE- und PE-Schichten zum Einsatz kommen. Mit diesen Systemen kann bereits eine wesentlich geringere Diffusionsrate erreicht werden als bei Gummischlauchrohrsystemen mit bestmöglichen Qualitäten und gleichwohl besteht noch ein dringendes Bedürfnis nach größerer Diffusionstätigkeit.

Bekannt sind weiterhin auch Rohrentwicklungen mit einer Aluminium-Innenbeschichtung, die zum rohrprofilierten und später zu einem Rohr geschweißten Aluminium mit Nylon oder anderen Kunststoffen produziert werden. Dabei wird aufgrund des verwendeten Aluminiums eine niedrigere Permeationsrate erreicht.

Während bei dem zuvor beschriebenen System der Nachteil besteht, daß das ETFE in dieser Schichtkombination in sieben Schichten nicht kostengünstig und - je nach Verfahren - nicht immer technisch einwandfrei mit gleicher Schichtdicke hergestellt werden kann, besteht bei dem zweiten System das Problem, daß die Verschweißung des Aluminiums sowie die gleichmäßige Einlagerung als Innenschicht in die Kunststoffschichten technisch äußerst schwierig und nicht immer mit gleichbleibendem Standard zu produzieren ist. Hinzukommt, daß sich Aluminium bei der Profilverarbeitung und besonders auch bei der Rohrverlegung mit den bekannten Nachteilen verzieht.

Es besteht somit ein Bedürfnis nach Schaffung einfacher herstellbarer Rohre, insbesondere auch für Gebiete, in denen nicht die hohen Anforderungen des Automobil-Tankbaus erfüllt werden müssen, wie beispielsweise in der Lebensmittel-, in der Bau-, in der Waser- und Rohrleitungs-Industrie.

Erfindungsgemäß wird dieses Bedürfnis durch das im Patentanspruch 1 genannte Verfahren und durch die in Anspruch 14 erwähnte Vorrichtung vorteilhaft gelöst. Bevorzugte Verfahrensmerkmale, die die Erfindung gemäß Anspruch 1 vorteilhaft weiterbilden, sind den Ansprüchen 2 bis 13 zu entnehmen.

Demgemäß macht die Erfindung ein Verfahren zur Herstellung diffusionsdichter mehrschichtiger Kunststoffrohre verfügbar, die insbesondere für Kraftstoffleitungen geeignet sind, wobei um einen Rohrschlauch, der vorzugsweise aus Polyamid hergestellt wird, eine permeationsdichte Folie überlappend gewickelt und anschließend der umwickelte Rohrschlauch mit wenigstens einer vorzugsweise auch extrudierten Außenrohrschicht ummantelt wird. In günstiger Weise wird die Herstellung vor allem durch Verwendung einer separat herstellbaren und auch im Handel verfügbaren permeationsdichten Folie, vorzugsweise Aluminiumfolie oder PTFE-Band, erleichtert, die spiralförmig, unter Umständen auch unter Verklebung, um den Rohrschlauch, insbesondere um das PA-Rohr gewickelt wird, wobei die Breite der Überlappung der Folienwicklungen in einer Größe vorgenommen wird, daß die gewünschte Dichtigkeit erreicht wird.

Bevorzugt wird als Folie PTFE-Band in einer Dicke von etwa 0,075 bis 0,2 mm verwendet, das auf dem Rohrschlauch entweder geklebt und/oder spiralverschweißt wird. Gemäß einer bevorzugten weiteren Ausgestaltung der Erfindung wird ein PTFE-Band mit anorganischen oder mit metallischen Füllstoffen für das Erzielen bzw. Verändern physikalischer Eigenschaften, wie beispielsweise Leitfähigkeit, dimensionale Stabilität und Härte, verwendet.

Alternativ wird als permeationsdichte Folie Aluminiumfolie mit einer Dicke von mindestens 0,1 mm spiralförmig um den Rohrschlauch gewickelt, vorzugsweise im noch teilwarmen Bereich und ggf. unter Verklebung, wobei die Folie jeweils an den Rändern in der notwendigen, für die Dichtigkeit sorgenden Breite überlappt wird. Für bestimmte Einsatzbedingungen können auch zwei- bis dreifache Überlappungen in günstiger Weise vorgesehen sein.

In vorteilhafter Weise wird bei der Erfindung die Erkenntnis umgesetzt, daß PTFE in geeigneter Dicke die besten permeationshemmenden Werte hat, auch wenn die Kosten im Vergleich zu Aluminium höher liegen. Bei Anwendung von Bändern aus PTFE oder dünnschichtigen Aluminiumfolien ab 0,1 mm Dicke ist in günstiger Weise gesichert, daß nach anschließender Ummantelung des umwickelten Rohrschlauchs, vorzugsweise mit extrudiertem Kunststoff in Form von geschlossenzelligen, flammhemmenden, geschäumten Material als PE-Rohr im mittleren Bereich des mehrschichtigen Kunststoffrohres eine preiswerte und absolut gleiche Dicke mit diffusionshemmender Schicht besteht. Selbstverständlich ist der mehrschichtige Aufbau nicht auf drei Schichten begrenzt. Wesentlich kommt es darauf an, daß der Aufbau einen tragenden Rohrschlauch und eine darüber angeordnete permeationsdichte Folie aufweist, während eine oder mehrere für den jeweiligen Anwendungsfall besonders geeignete Außenrohrschichten vorgesehen sein können.

Für den Rohrschlauch wird vorzugsweise Polyamid verwendet. Gut geeignet sind jedoch auch andere Kunststoffmaterialien und/oder Materialkombinationen wie ETFE/PA, PVDF/PA, EVOH+PA, etc.

Die Vorrichtung zur Durchführung des Verfahrens weist einen Extruder für den Rohrschlauch auf, an den sich direkt eine Laminier-Umwicklungsstation für Aluminiumfolie bzw. PTFE-Band anschließt. Danach folgt wiederum ein Extruder für die Ummantelung des umwickelten Rohrschlauchs, wobei vorteilhaft auch geblähtes PE oder ähnliches Material mit einer weiteren Kunststoff-Treibtechnik (Gas) zur Schaumherstellung zur Anwendung kommen kann. Alternativ sind auch Ummantelungen aus reinem PE, PA oder anderen geeigneten Kunststoffen mit niedriger Diffusionsrate möglich. Anstelle von Kohlenwasserstoffgasen kann alternativ auch chemisches Treibmittel eingesetzt werden, falls die Dichte nicht so hoch sein soll.

Der besondere Vorzug des erfinderischen Verfahrens und der Vorrichtung liegt darin, daß hier ein mehrschichtiges Kunststoffrohr ohne riskante Aluminiumschweißtechnik mit den bekannten Unwegbarkeiten der Börtelung am Rande und der Schweißung gefertigt werden kann. Besonders beim Einsatz von PTFE kommen die günstigen Eigenschaften dieses Materials, nämlich ein breites Temperaturanwendungsgebiet von mindestens -200 bis +200 °C, eine Resistenz gegenüber Chemikalien, eine fehlende Entflammbarkeit und exzellente dielektrische Werte, zur Auswirkung, was besonders im Kraftstoffbereich von Bedeutung ist. Je nach Zusammensetzung der wenigstens drei verschiedenen Schichten können für alle Anwendungen im Bereich der Automobilindustrie, der Nahrungsmittelindustrie, der pharmazeutischen und chemischen Industrie sowie sonstigen Industrien maßgeschneiderte Lösungen mit einer ungewöhnlichen Bandbreite an Kombinationen bei sehr wirtschaftlicher Herstellbarkeit und Einsatz gegeben sein.

Bezüglich der erfindungsgemäßen Vorrichtung besteht vorteilhaft auch die Möglichkeit, vorhandene Wickelstationen leicht mit neuen Bändern auszurüsten, was wirtschaftlich größtmögliche Vorteile durch schnelle Umrüstung ermöglicht. Außerdem können statt reiner PTFE-Bänder auch PTFE-beschichtete Glasgewebe bei bestimmten Anwendungsfällen zum Einsatz kommen.

Nachfolgend wird die Erfindung kurz anhand der beigefügten Zeichnungen erläutert. Es zeigen:
- Fig. 1: eine perspektivische Ansicht eines nach dem Verfahren hergestellten mehrschichtigen Kunststoffrohres; und
- Fig. 2: eine schematische Darstellung einer Vorrichtung zur Durchführung des Verfahrens zur Herstellung diffusionsdichter mehrschichtiger Kunststoffrohre.

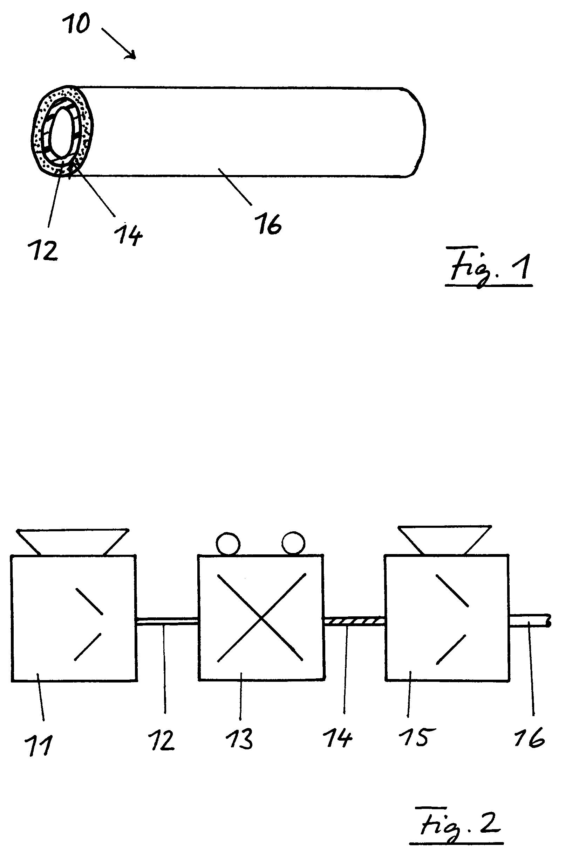

In Fig. 1 ist perspektivisch ein mehrschichtiges Kunststoffrohr 10 dargestellt, das nach dem erfindungsgemäßen Verfahren hergestellt worden ist und insgesamt aus drei Schichten besteht. Die innere Schicht wird durch einen Rohrschlauch 12 gebildet, auf die überlappend als mittlere Schicht ein PTFE-Band 14 gewickelt ist, das von einer Ummantelungsschicht 16 umgeben ist. Zur Vermeidung von Wiederholungen wird bezüglich der einzelnen Schichten auf die obigen Ausführungen verwiesen.

Fig. 2 veranschaulicht schematisch eine Vorrichtung zur Durchführung des Verfahrens zur Herstellung diffusionsdichter mehrschichtiger Kunststoffrohre 10. Die Vorrichtung besteht aus einem Extruder 11 für den Rohrschlauch 12, einer nachgeordneten Laminier-Umwicklungsstation 13 für Aluminiumfolie bzw. PTFE-Band 14 und aus einem sich daran anschließenden Extruder 15 für die Ummantelung 16 des umwickelten Rohrschlauchs.

## Patentansprüche

1. Verfahren zur Herstellung diffusionsdichter mehrschichtiger Kunststoffrohre, insbesondere für Kraftstoffleitungen,
**dadurch gekennzeichnet,**
daß um einen Rohrschlauch eine permeationsdichte Folie überlappend gewickelt und anschließend der umwickelte Rohrschlauch mit wenigstens einer Außenrohrschicht ummantelt wird.

2. Verfahren nach Anspruch 1, dadurch gekennzeichnet, daß als Folie PTFE-Band verwendet wird.

3. Verfahren nach Anspruch 2, dadurch gekennzeichnet, daß das PTFE-Band in einer Dichte von etwa 0,075 bis 0,2 mm verwendet wird.

4. Verfahren nach einem der vorangehenden Ansprüche, dadurch gekennzeichnet, daß das umwickelte PTFE-Band auf den Rohrschlauch geklebt wird.

5. Verfahren nach einem der Ansprüche 1 bis 3, dadurch gekennzeichnet, daß das umwickelte PTFE-Band spiralverschweißt wird.

6. Verfahren nach einem der vorangehenden Ansprüche, dadurch gekennzeichnet, daß ein PTFE-Band mit anorganischen oder metallischen Füllstoffen für das Erzielen bzw. Verändern physikalischer Eigenschaften, wie beispielsweise Leitfähigkeit, dimensionale Stabilität und Härte, verwendet wird.

7. Verfahren nach Anspruch 1, dadurch gekennzeichnet, daß Aluminiumfolie mit einer Dicke von mindestens 0,1 mm verwendet wird.

8. Verfahren nach Anspruch 5, dadurch gekennzeichnet, daß die Aluminiumfolie spiralförmig um den Rohrschlauch gewickelt wird.

9. Verfahren nach Anspruch 7 oder 8, dadurch gekennzeichnet, daß die Aluminiumfolie im noch teilwarmen Bereich, bei Bedarf geklebt, um den extrudierten Rohrschlauch gewickelt wird.

10. Verfahren nach einem der vorangehenden Ansprüche, dadurch gekennzeichnet, daß der umwickelte Rohrschlauch mit extrudiertem Kunststoff ummantelt wird.

11. Verfahren nach Anspruch 10, dadurch gekennzeichnet, daß als Ummantelungswerkstoff geschlossenzelliges, flammhemmendes, geschäumtes Material verwendet wird.

12. Verfahren nach Anspruch 11, dadurch gekennzeichnet, daß als Ummantelungswerkstoff geblähtes PE zur Erzielung guter Biegekrümmungen verwendet wird.

13. Verfahren nach Anspruch 10, dadurch gekennzeichnet, daß als Ummantelungswerkstoff eine PE-Folie verwendet wird.

14. Verfahren nach Anspruch 10, dadurch gekennzeichnet, daß als Ummantelungswerkstoff Gummi verwendet wird.

15. Verfahren nach einem der vorangehenden Ansprüche, dadurch gekennzeichnet, daß als Material für den Rohrschlauch Polyamid oder andere diffusionshemmende Kunststoffe oder Gummiummantelungen verwendet wird.

16. Vorrichtung zur Durchführung des Verfahrens nach Anspruch 1, bestehend aus:
einem Extruder (11) für den Rohrschlauch (12),
einer nachgeordneten Laminier-Umwicklungsstation (13) für Aluminiumfolie bzw. PTFE-Band (14), und aus
einem sich daran anschließenden Extruder (15) für die Ummantelung (16) des umwickelten Rohrschlauchs (12).
